# EUROPÄISCHE PATENTSCHRIFT

(11) **EP 2 344 296 B1**
(45) Veröffentlichungstag und Bekanntmachung des Hinweises auf die Patenterteilung: **01.06.2016**
(21) Anmeldenummer: 09759876.7
(22) Anmeldetag: 10.11.2009
(51) Int. Cl.: B23K 26/14, F16K 11/07, F16K 31/00

(54) **MASCHINE ZUR BEARBEITUNG EINES WERKSTÜCKS MITTELS EINES LASERSTRAHLS**
MACHINE FOR MACHINING A WORKPIECE BY MEANS OF A LASER BEAM
MACHINE D'USINAGE D'UNE PIÈCE À L'AIDE D'UN FAISCEAU LASER

(30) Priorität: 14.11.2008 DE 102008057415
(43) Veröffentlichungstag der Anmeldung: 20.07.2011
(73) Patentinhaber: Hoerbiger Automatisierungstechnik Holding GmbH, 86972 Altenstadt (DE)
(72) Erfinder: SCHROBENHAUSER, Max, 86971 Peiting (DE); RAUSCH, Günther, 86956 Schongau (DE)
(74) Vertreter: Möhring, Friedrich
(86) Internationale Anmeldenummer: PCT/EP2009/008009
(87) Internationale Veröffentlichungsnummer: WO 2010/054792

(56) Entgegenhaltungen:
- WO-A2-2004/087362
- DE-A1-102007 008 567
- JP-A- 8 174 261
- US-B1- 6 715 731

## Beschreibung

Die vorliegende Erfindung betrifft eine Maschine zur Bearbeitung eines Werkstücks mittels eines Laserstrahls, insbesondere zum Laserschneiden von Metallen, umfassend einen Werkstückhalter, eine Laserbearbeitungseinheit, eine Antriebseinheit zur Bewegung der Laserbearbeitungseinheit und des Werkstückhalters relativ zueinander, eine Maschinensteuerung und eine Gasversorgungseinrichtung, wobei die Gasversorgungseinrichtung mindestens eine Gasquelle, eine der Laserbearbeitungseinheit zugeordnete Gasdüse, eine die Gasdüse mit der mindestens einen Gasquelle verbindende Leitungsanordnung und mindestens ein in dieser angeordnetes, an eine Gassteuereinheit angeschlossenes proportionales Druckregelventil aufweist.

Mittels eines Laserstrahls lassen sich unterschiedliche Bearbeitungen verschiedener Werkstoffe durchführen. Bekannt sind beispielsweise Verfahren zum Laserschweißen, zum Laserschneiden und zum Laserbeschriften, insbesondere von Metall. Die Energiedichte des fokussierten Laserstrahls reicht aus, um den Werkstoff zu schmelzen oder sogar zu verdampfen.

Um eine Beschädigung der Laseroptik oder Beeinträchtigung von deren optischen Eigenschaften zu vermeiden ist ein zuverlässiger Abtransport der bei der Materialbearbeitung mittels des Laserstrahls entstehenden Substanzen erforderlich. Hierzu wird auf den Bereich der Laserbearbeitung eine Hochgeschwindigkeits-Gasstrahl gerichtet, zu welchem Zweck Laserbearbeitungsmaschinen der hier in Rede stehenden Art eine mit einer Gasdüse ausgestattete Gasversorgungseinrichtung aufweisen. Bei bestimmten Laserbearbeitungsverfahren ist dabei wichtig, die Geschwindigkeit des Gasstrahls an die spezifische Bearbeitungsoperation anpassen zu können; namentlich gilt dies für das Laserschneiden, wo die Gasgeschwindigkeit zunächst, nämlich bevor der Laserstrahl die Materialstärke vollständig durchdringt, niedriger ist als beim anschließenden fortgesetzten Schneiden des Materials längs der Schnittlinie. Das bei gattungsgemäßen Maschinen vorgesehene proportionale Druckregelventil der Gasversorgungseinrichtung dient dabei der Einstellung der Geschwindigkeit des die Gasdüse verlassenden Gasstrahls. Da die Art des Gases auch von Einfluss ist auf das Ergebnis der mittels des Laserstrahls erfolgenden Materialbearbeitung umfasst die Gasversorgungseinheit gattungsgemäßer Maschinen zum Teil mehrere unterschiedliche Gase bereitstellende Gasquellen.

Im Hinblick auf den gesamten vorstehend dargelegten Stand der Technik sind beispielsweise die JP 08174261 A, die KR 1020060059652 A, die DE 102005028243 A1, die DE 69317313 T3, die DE 202007015908 U1, die DE 102005049010 A1, die DE 10154352 A1, die DE 60216996 T2 und die WO 2004/087362 A2 einschlägig.

Das an letzter Stelle genannte Dokument offenbart dabei eine solche Maschine zur Bearbeitung eines Werkstücks mittels eines Laserstrahls, bei der zur Steuerung des Gasstromes durch die der Laserbearbeitungseinheit zugeordnete Gasdüse ein proportionales Durchflussregelventil oder ein Servo-Regelventil vorgesehen sein kann. Letzteres kann dabei insbesondere als pneumatisches Durchflussregelventil ausgeführt sein, wobei das Durchflussregelventil in Abhängigkeit vom Gasdruck gesteuert wird.

Die US 6,715,731 B1 offenbart ein direkt betätigtes elektrisches Ventil, das eine mindestens einen einseitig eingespannten piezoelektrischen Biegewandler umfassende piezoelektrische Antriebseinheit aufweist, mittels derer ein Ventilkörper direkt betätigt wird. Die piezoelektrische Antriebseinheit kann dabei insbesondere zwei gegensinnig orientierte piezoelektrische Biegewandler umfassen.

Die DE 102007008567 A1 offenbart eine Stelleinrichtung mit einem Piezoaktor und einer hydraulisch arbeitenden Hubverstärkeranordnung. Der - vergleichsweise geringe - Hub des Piezoaktors wird durch die hydraulische (bzw. hydrostatische) Hubverstärkeranordnung vergrößert, um eine entsprechende Verstellung des Steuerkolbens des Ventils zu bewirken. Die Funktion dieser Stelleinrichtung setzt für die besagte Hubverstärkung zwingend ein inkompressibles Druckfluid voraus.

Gegenüber dem weiter oben dargelegten gattungsbildenden Stand der Technik liegt der vorliegenden Erfindung die Aufgabe zugrunde, eine Maschine der eingangs angegebenen Art bereitzustellen, die sich durch ein besonders hohes Leistungspotential auszeichnet. Namentlich wird angestrebt, im Interesse möglichst kurzer Bearbeitungsdauern eine Materialbearbeitung mittels eines Laserstrahls mit einer bisher nicht realisierten bzw. realisierbaren Dynamik und/oder im Interesse einer weiter verbesserten Qualität des Erzeugnisses eine gesteigerte Präzision der Materialbearbeitung mittels eines Laserstrahls zu ermöglichen.

Gelöst wird diese Aufgabe gemäß der vorliegenden Erfindung, indem bei einer gattungsgemäßen Maschine zur Bearbeitung eines Werkstücks mittels eines Laserstrahls das proportionale Druckregelventil eine piezopneumatische Vorstufe und eine von dieser betätigte pneumatische Leistungsstufe umfasst. Eine solche Ausführung des proportionalen Druckregelventils bildet in durchaus überraschender Weise den Schlüssel zu einer Reihe von Möglichkeiten, die sich, wie nachstehend im Einzelnen dargelegt, in einer substantiellen Verbesserung verschiedener praxisrelevanter Leistungsmerkmale der Maschine auswirken.

Eine erste sich in Anwendung der vorliegenden Erfindung ergebende Möglichkeit besteht darin, dass das proportionale Druckregelventil an der Laserbearbeitungseinheit angeordnet ist, d.h. bei einer Bewegung der Laserbearbeitungseinheit mit dieser mitbewegt wird. Denn das Gewicht des proportionalen Druckregelventils lässt sich durch dessen Ausführung mit einer piezopneumatischen Vorstufe und einer von dieser betätigten pneumatischen Leistungsstufe gegenüber dem Stand der Technik so weit reduzieren, dass sich eine Anordnung bzw. Anbringung des proportionalen Druckregelventils direkt an der Laserbearbeitungseinheit nicht negativ auf die Dynamik der Maschine auswirkt. Bei Maschinen nach der vorliegenden Erfindung lässt sich somit die Laserbearbeitungseinheit mit einer substantiell höheren Dynamik bewegen als bei einer Anordnung eines deutlich schwereren magnetgesteuerten proportionalen Druckregelventils an der Laserbearbeitungseinheit. Und verglichen mit einer stationären Anordnung des proportionalen Druckregelventils, d.h. einer Anordnung, bei der dieses nicht gemeinsam mit der Laserbearbeitungseinheit verfahren sondern vielmehr über einen Schlauch oder eine sonstige flexible Gasleitung mit der an der Laserbearbeitungseinheit angeordneten Gasdüse verbunden ist, ergibt sich eine substantiell verbesserte Präzision der Bearbeitung; denn der aus der Gasdüse austretende Gasstrahl lässt sich, weil keine verformbaren Gasleitungen erforderlich sind und sich der Totraum zwischen dem proportionalen Druckregelventil und der Gasdüse verringern lässt, sehr viel genauer an den Laserstrahl und die durch diesen aktuell durchgeführte Materialbearbeitung anpassen. Dies gilt sowohl im Hinblick auf die jeweils einstellbare Austrittsgeschwindigkeit des Gasstrahls als auch im Hinblick auf die Gasart, d.h. einen Gaswechsel innerhalb der Bearbeitungsoperation. Auch ein besonders schneller Gaswechsel bzw. eine nicht nur besonders genaue, sondern auch besonders schnelle Veränderung der Geschwindigkeit des die Gasdüse verlassenden Gasstrahls sind wiederum auch Aspekte der in Anwendung der vorliegenden Erfindung ermöglichten besonders hohen Bearbeitungsdynamik. Im Sinne der vorstehend dargelegten Aspekte zeichnet sich eine besonders bevorzugte Weiterbildung der Erfindung dadurch aus, dass das proportionale Druckregelventil besonders nahe zu einer an der Laserbearbeitungseinheit angebrachten Gasdüse, bevorzugt in deren unmittelbarer Nähe angeordnet ist.

Von besonderem Vorteil für die praktische Anwendung erfindungsgemäßer Maschinen für die Laserbearbeitung von Werkstücken ist auch, dass infolge der erfindungsgemäßen Ausführung des Druckregelventils mit einer piezopneumatischen Vorstufe ein Betrieb der Druckregelventils mit einer Betriebsspannung von 24V möglich ist, wobei selbst bei hohen Schaltleitungen auf der Leistungsseite die elektrische Leistungsaufnahme der piezopneumatischen Vorstufe weniger als 50mW, bevorzugt maximal 30mW beträgt.

Die durch die vorliegende Erfindung bereitgestellten Möglichkeiten werden gemäß einer bevorzugten Weiterbildung der Erfindung in besonderem Maße genutzt, wenn ein Steuerdruckausgang der piezopneumatischen Vorstufe unmittelbar die pneumatische Leistungsstufe beaufschlagt. Namentlich lässt sich hierdurch ein besonders kompaktes proportionales Druckregelventil realisieren, das sich in idealer Weise für die Unterbringung in einer bewegten Laserbearbeitungseinheit eignet. Unter demselben Gesichtspunkt ist dabei besonders günstig, wenn die piezopneumatische Vorstufe ein direkt an das Gehäuse der pneumatischen Leistungsstufe angebautes piezopneumatisches Pilot-Proportionalventil umfasst. Dieses kann wiederum in bevorzugter Weiterbildung ein Gehäuse mit einem darin angeordneten, zwischen einer Eingangsdüse und einer Abluftdüse lageveränderbaren piezoelektrischen Biegewandler umfassen. Von Vorteil ist dabei, wenn der Innenraum des Gehäuses des piezopneumatischen Pilot-Proportionalventils mit der pneumatischen Leistungsstufe kommuniziert, um diese in dem oben dargelegten Sinne unmittelbar zu beaufschlagen.

Das Gehäuse des piezopneumatischen Pilot-Proportionalventils kann in einer Kapselung untergebracht sein, in deren Innenraum die Abluftöffnung des piezopneumatischen Pilot-Proportionalventils mündet, wobei die Kapselung eine Austrittsöffnung mit einem gegenüber der Abluftdüse großen Querschnitt aufweist. Eine solche Kapselung schützt die Abluftöffnung des Pilot-Proportionalventils vor Strömungseinflüssen, welche die Reproduzierbarkeit der Regelkennlinie des proportionalen Druckregelventils beeinträchtigen könnten, und trägt auf diese Weise zu einer besonders hohen Präzision bei. Gleichzeitig wird durch die Dimensionierung der Austrittsöffnung der Kapselung im Verhältnis groß zu der Abluftdüse ein unerwünschter Druckaufbau innerhalb der Kapselung, der ebenfalls zu einer Beeinträchtigung der Reproduzierbarkeit der Regelkennlinie des proportionalen Druckregelventils führen könnte, verhindert. Die Kapselung kann zumindest einen Teil der elektronischen Komponenten der Gassteuereinheit aufnehmen, so dass auch diese trotz ihrer unmittelbaren Nähe zu dem proportionalen Druckregelventil geschützt untergebracht sind.

Umfasst die piezopneumatische Vorstufe im Sinne der vorstehend erläuterten Weiterbildung der Erfindung ein direkt an das Gehäuse der pneumatischen Leistungsstufe angebautes piezopneumatisches Pilot-Proportionalventil, so ist gemäß einer abermals anderen Weiterbildung der Erfindung die Eingangsdüse des piezopneumatischen Pilot-Proportionalventils über eine Öffnung in dessen Gehäuse an eine in dem Gehäuse der pneumatischen Leistungsstufe angeordnete Steuergasbohrung angeschlossen. Hierdurch lässt sich die Statik des Gehäuses der pneumatischen Leistungsstufe für einen Anschluss des Steuergases zu dem piezopneumatischen Pilot-Proportionalventil verwenden. Zur Klarstellung ist in diesem Zusammenhang darauf hinzuweisen, dass als Steuergas des piezopneumatischen Pilot-Proportionalventils grundsätzlich jedes Gas und jede Gasmischung (z.B. auch Luft) in Betracht kommt. Insbesondere kommt in Betracht, dass das piezopneumatische Pilot-Proportionalventil mit einem ohnehin in der Gasversorgungseinrichtung verfügbaren Gas betrieben wird, insbesondere indem die vorstehend erläuterte Steuergasbohrung über einen Vordruckregler, der den an dem Pilot-Proportionalventil beispielsweise auf 1,2bar einregeln kann, an eine Hochdruck-Gasquelle der Gasversorgungseinrichtung angeschlossen ist. Eine andere Option besteht darin, dass die Steuergasbohrung an eine von der Gasversorgungseinrichtung verschiedene, gesonderte Druckmittelquelle angeschlossen ist.

Hinsichtlich der Ausführung der pneumatischen Leistungsstufe zeichnet sich eine bevorzugte Weiterbildung der Erfindung dadurch aus, dass die pneumatische Leistungsstufe einen Eingang, einen Ausgang und einen in einer Steuerkolbenbohrung axial verschiebbar geführten Steuerkolben aufweist, der mindestens eine mit einer korrespondierenden gehäusefesten zweiten Steuerkante zusammenwirkende erste Steuerkante aufweist, wobei die erste und die zweite Steuerkante einen in dem Strömungsweg zwischen dem Eingang und dem Ausgang angeordneten variablen Steuerspalt definieren. Bei einer solchen Gestaltung lassen sich, wie nachstehend im Detail dargelegt wird, besondere Vorteile realisieren. So kann beispielsweise, indem die zweite Steuerkante im Bereich der Öffnung des Ausgangs zu der Steuerkolbenbohrung angeordnet ist, der Steuerkolben von jeder Beeinträchtigung durch das in dem Steuerspalt expandierende Gas freigehalten werden; denn die Expansion mit ihrer erheblichen Beunruhigung der Strömung erfolgt im Ausgang der pneumatischen Leistungsstufe, d.h. in dem gehäusefesten Bereich, so dass eine Rückwirkung auf den Steuerkolben verhindert wird. Im Bereich des Steuerkolbens liegt indessen stetig der konstante Druck des bereitgestellten Gases an. Dies resultiert in einer hohen Präzision der Reproduzierbarkeit der Regelkennlinie. Hierzu trägt gemäß einer weiteren bevorzugten Ausführungsform weiterhin bei, wenn die Querschnittsfläche der Öffnung des Eingangs zur Steuerkolbenbohrung größer ist als die Querschnittsfläche der Öffnung des Ausgangs zur Steuerkolbenbohrung.

Weist die pneumatische Leistungsstufe in diesem Sinne einen Steuerkolben auf und umfasst die piezopneumatische Vorstufe einen piezoelektrischen Biegewandler, so kann das Übersetzungsverhältnis der Bewegung des piezoelektrischen Biegewandlers zum Verstellweg des Steuerkolbens durch geeignete Wahl der maßgeblichen Auslegungsparameter zumindest bereichsweise mindestens 1:50, bevorzugt etwa 1:100 oder mehr betragen. Dies ist eine im Hinblick auf die Regelcharakteristik besonders günstige Relation.

Im Hinblick auf eine rasche Belüftung der Gasleitung zwischen dem proportionalen Druckregelventil und der Gasdüse und somit die Möglichkeit eines besonders raschen Gaswechsel ist es von Vorteil, wenn die pneumatische Leistungsstufe eine Belüftung und der Steuerkolben eine dritte Steuerkante aufweist, die mit einer korrespondierenden gehäusefesten vierten Steuerkante zusammenwirkt, wobei die dritte und die vierte Steuerkante einen in dem Strömungsweg zwischen dem Ausgang und der Belüftung angeordneten variablen zweiten Steuerspalt definieren. Auch insoweit ist es günstig, wenn die vierte Steuerkante im Bereich der Öffnung des Ausgangs zu der Steuerkolbenbohrung angeordnet ist. Und auch hier gilt im Hinblick auf die damit erzielbaren, vorstehend im Zusammenhang mit der Verbindung des Eingangs mit dem Ausgang erläuterten Vorteile wiederum, dass die Querschnittsfläche der Öffnung der Belüftung zur Sterkolbenbohrung bevorzugt größer ist als die Querschnittsfläche der Öffnung des Ausgangs zur Steuerkolbenbohrung.

Umfasst die pneumatische Leistungsstufe im Sinne der vorstehend erläuterten Weiterbildung der Erfindung einen Eingang, einen Ausgang, eine Belüftung und einen in einer Steuerkolbenbohrung axial verschiebbar geführten Steuerkolben, welcher eine mit einer gehäusefesten zweiten Steuerkante zusammenwirkende erste Steuerkante und eine mit einer gehäusefesten vierten Steuerkante zusammenwirkende dritte Steuerkante aufweist, so unterscheidet sich gemäß einer nochmals anderen besonders bevorzugten Weiterbildung der Erfindung durch eine entsprechende Profilierung der ersten und/oder der zweiten Steuerkante die Strömungsregelcharakteristik beim Belüften des Ausgangs von der Strömungsregelcharakteristik beim Öffnen des Proportionalventils durch Verbinden des Ausgangs mit dem Eingang. Namentlich kann in diesem Sinne die dritte und die vierte Steuerkante scharfkantiger sein als die erste und/oder die zweite Steuerkante, insbesondere indem die erste und/oder die zweite Steuerkante angefast ist. Bei einer solchen Ausgestaltung der Maschine ist einen besonders feinfühliges und präzises Einstellen des am Ausgang des proportionalen Druckregelventils und somit an der Gasdüse anliegenden Druckes möglich. Umgekehrt ist durch die - verglichen mit den ersten und zweiten Steuerkanten - relativ scharfkantige Ausführung der dritten und vierten Steuerkante beim Belüften des Ausgangs ein schlagartiger Abbau des Druckes innerhalb der Gasleitung stromabwärts des Druckregelventils realisierbar, was von großem Vorteil ist im Hinblick auf die Möglichkeit eines besonders raschen Gaswechsels.

Weiter oben wurde bereits ausgeführt, dass besonders bevorzugt ein Steuerdruckausgang der piezopneumatischen Vorstufe unmittelbar die pneumatische Leistungsstufe beaufschlagt. Im Hinblick auf die konstruktive Ausgestaltung eines solchen direkten Beaufschlagung der pneumatischen Leistungsstufe durch die piezopneumatische Vorstufe bestehen verschiedene Möglichkeiten, die unterschiedliche Vorteile aufweisen und daher je nach den spezifischen Randbedingungen bevorzugt zum Einsatz kommen können. Umfasst die pneumatische Leistungsstufe im Sinne der obigen Ausführungen einen in einer Steuerkolbenbohrung axial verschiebbaren Steuerkolben, so kann insbesondere die Stirnfläche des Steuerkolbens einen Steuerraum begrenzen, der direkt an den Steuerdruckausgang der piezopneumatischen Vorstufe angeschlossen ist. Hierdurch ergibt sich eine besonders kompakte Bauweise des Druckregelventils; allerdings werden sehr hohe Anforderungen an die möglichst dichte und trotzdem reibungsarme Führung des Steuerkolbens in der Steuerkolbenbohrung gestellt. Als mögliche Alternative kommt beispielsweise in Betracht, dass auf den Steuerkolben ein Betätigungsstößel wirkt, der mit einem an den Steuerdruckausgang der piezopneumatischen Vorstufe angeschlossenen Druck/Weg-Wandler in Verbindung steht. Durch den Druck/Weg-Wandler, der in gebräuchlicher Weise eine Membran aufweisen kann, erfolgt eine Gastrennung zwischen der piezopneumatischen Vorstufe und der pneumatischen Leistungsstufe.

Entsprechende Gesichtspunkte gelten für eine Bewegung des Steuerkolbens, d.h. typischerweise dessen Rückstellung. Auch hier sind mehrere Möglichkeiten mit individuellen Vorteilen realisierbar. So kann insbesondere der Steuerkolben auf der dem Steuerraum bzw. dem Betätigungsstößel gegenüberliegenden Seite von einer Rückstellfeder beaufschlagt werden. Oder die dem Steuerraum bzw. dem Betätigungsstößel gegenüberliegende Stirnfläche des Steuerkolbens begrenzt einen Rückstell-Steuerraum, der an den Steuerdruckausgang eines piezopneumatischen Rückstell-Pilotventils angeschlossen ist. Gemäß einer wiederum anderen Weiterbildung wirkt auf den Steuerkolben auf der dem Steuerraum bzw. dem Betätigungsstößel gegenüberliegenden Seite ein Rückstellstößel, der mit einem an den Steuerdruckausgang eines piezopneumatischen Rückstell-Pilotventils angeschlossenen Druck/Weg-Wandler in Verbindung steht.

Bevorzugt ist der Steuerkolben der pneumatischen Leistungsstufe, soweit ein solcher Steuerkolben vorgesehen ist, trockenlauffähig. Auf Schmier- und Gleitmittel jeglicher Art kann in diesem Falle verzichtet werden. Dies stellt, da demzufolge keinerlei Schmier- bzw. Gleitmittel mit dem Gas aus dem Druckregelventil ausgetragen werden können, einen wesentlichen Aspekt des Schutzes der Laseroptik vor Verunreinigungen dar. Besonders bevorzugt besteht der Steuerkolben dabei aus Leichtmetall, bevorzugt aus Aluminium; und er ist in vorteilhafter Ausgestaltung oberflächlich mit einem Teflonderivat beschichtet. Eine solche Gestaltung ist von Vorteil im Hinblick auf eine hohe Regeldynamik und eine besonders gute Reproduzierbarkeit der Regelcharakteristik. Innerhalb eines breiten Temperaturspektrums lässt sich eine besonders gute Reproduzierbarkeit der Regelcharakteristik namentlich dadurch sicherstellen, dass der Steuerkolben in einer in ein Ventilgehäuse eingesetzten Steuerhülse geführt ist, in der die Steuerkolbenbohrung ausgeführt ist und die bevorzugt aus demselben oder einem artverwandten Material wie der Steuerkolben besteht und insbesondere ebenfalls oberflächlich mit einem Teflonderivat beschichtet sein kann. Ist in dem vorstehend dargelegten Sinne eine Steuerhülse vorgesehen, so weist diese bevorzugt zu der Steuerkolbenbohrung hin einen Eingangsdurchbruch, einen Ausgangsdurchbruch und einen Belüftungsdurchbruch auf, die mit dem Eingang, dem Ausgang bzw. der Belüftung des Druckregelventils kommunizieren.

Wiederum erhebliche Gestaltungsmöglichkeiten bestehen für die Ausführung der einen Teil der Gassteuereinheit bildenden Regelung des Druckregelventils. Insoweit kommt insbesondere in Betracht, dass die Gassteuereinheit eine rein digitale Regelstufe umfasst. Dies bietet insbesondere die Möglichkeit, bei gleichzeitig minimalen Reaktions- und Regelzeiten nicht-lineare Regelzusammenhänge und/oder individuelle Regelkennlinien vorzugeben. Die Regelstufe der Gassteuereinheit kann dabei insbesondere - unter Verzicht auf eine analoge Schnittstelle - über eine uni- bzw. bidirektionale digitale Kommunikationsschnittstelle mit der Maschinensteuerung kommunizieren. Es ergeben sich besonders vorteilhafte weitere Optionen, wie insbesondere die Möglichkeit, den Parametersatz des proportionalen Druckregelventils von der Maschinensteuerung bedarfsgerecht zu verändern und an den aktuellen Prozess anzugleichen. Weiterhin ist besonders günstig, wenn das proportionale Druckregelventil über eine Selbstdiagnosefunktion verfügt und Veränderungen der Regelstrecke selbständig erkennt.

Für typische Anwendungsfälle reicht dabei sogar aus, wenn die Gassteuereinheit eine reine Druckregelung umfasst, d.h. auf eine Lageregelung des Steuerkolbens oder eines vergleichbaren Steuerelements verzichtet wird und der am Ausgang des Druckregelventils herrschende Druck direkt geregelt wird. In Betracht kommt allerdings auch eine anderweitige Ausgestaltung der Regelstufe, beispielsweise indem die Gassteuereinheit eine kombinierte Druck-/Lageregelung umfasst, bei der insbesondere ein an die Gassteuereinheit angeschlossener, die Lage des Steuerkolbens erfassender Kolbenstellungssensor vorgesehen ist.

Im Hinblick auf eine unmittelbare steuerungstechnische Verknüpfung der Gassteuereinheit mit der Steuerung des Antriebs der Laserbearbeitungseinheit weist die Maschinensteuerung bevorzugt einen Druckschalter auf, der mit dem am Ausgang des proportionalen Druckregelventils herrschenden Druck beaufschlagt wird und auf einen Verstellantrieb für die Laserbearbeitungseinheit einwirkt. Hierdurch kann im Interesse einer hohen Prozessdynamik die Bewegung der Laserbearbeitungseinheit unmittelbar mit der die Gasdüse verlassenden Gasströmung gekoppelt werden.

In der Leitungsanordnung von Maschinen zur Laserbearbeitung von Werkstücken kann stromaufwärts des proportionalen Druckregelventils mindestens ein Schaltventil angeordnet sein, mittels dessen sich die Gasquelle von der weiteren Leitungsanordnung absperren lässt. Die gilt namentlich im Falle, dass eine Mehrzahl von Gasquellen vorgesehen ist, wobei dann bevorzugt jeder Gasquelle ein eigenes Schaltventil zugeordnet ist. Auch solche Schaltventile sind besonders bevorzugt elektropneumatisch ausgeführt, und zwar mit einem piezoelektrischen oder elektromagnetischen Antrieb. Hierdurch wird das auf Seiten der Gasdruckregelung erzielbare Ergebnis nicht durch eine ungünstige Ausführung der Schaltventile beeinträchtigt. Vielmehr lassen sich in diesem Falle die Schaltventile in einer für das Leistungsergebnis der Maschine günstigen Weise auf das proportionale Druckregelventil abstimmen. Besonders bevorzugt sind dabei die Schaltventile rückströmungsfest ausgeführt; dies macht den Einsatz von Rückschlagventilen überflüssig, die nach dem Stand der Technik zur Vermeidung einer Rückströmung eines an dem proportionalen Druckregelventil anstehenden Gases in eine ein anderes Gas bevorratende Gasquelle erforderlich sind.

Maschinen zur Laserbearbeitung von Werkstücken lassen Betriebsparameter zu, die sich substantiell von den bisher erzielbaren Betriebsparametern unterscheiden. So kann insbesondere die pneumatische Leitungsstufe einen Betriebsbereich von (z.T. deutlich) über 20bar, z.B. bis zu 30bar oder noch darüber aufweisen. Dies ermöglicht Anwendungen, die bisher nicht realisiert werden konnten. Auch können bei den in technischer Umsetzung der Erfindung realisierbaren Maschinen die Reaktionszeit des proportionalen Druckregelventils unter 200ms, bevorzugt höchstens 150ms betragen und/oder 90% der ausgangsseitigen Druckveränderung des proportionalen Druckregelventils innerhalb von maximal 100ms eingeregelt sein, was wegen der damit verbundenen, bisher nicht erzielbaren Dynamik ebenfalls neue Anwendungen und Arbeitsergebnisse ermöglicht. Auch die mögliche Reduktion des Totvolumens zwischen dem proportionalen Druckregelventil und der Gasdüse auf maximal 1200mm³, bevorzugt höchstens 600mm³ resultiert, wie weiter oben bereits dargelegt wurde, in einer gegenüber dem Stand der Technik substantiell gesteigerten Prozessdynamik und -präzision. Insoweit kommt ebenfalls zum Tragen, dass das Gewicht der an der Laserbearbeitungseinheit angeordneten Komponenten der Gasversorgungseinrichtung maximal 1500g, bevorzugt weniger als 1000g betragen kann. Da die Ausführung des Druckregelventils, wie im einzelnen dargelegt, insbesondere die Bereitstellung gattungsgemäßer Maschinen zur Laserbearbeitung von Werkstücken mit einer präzisen und hochdynamischen Regelung hoher Gasleistungen ermöglicht, sind Einsatzbereiche mit sehr hohen benötigten Gasströmen erschlossen, wobei wenn bei Gasdrücken von über 20bar, insbesondere bis zu 30bar der Strömungsquerschnitt der Gasdüse bevorzugt bis zu 5,7mm², besonders bevorzugt sogar bis zu 7mm² beträgt, was bei der Ausführung der Gasdüse mit einem runden Strömungsquerschnitt einem Durchmesser von bevorzugt bis zu 2,7mm, besonders bevorzugt bis zu 3mm entspricht. Ein Mindestquerschnitt der Gasdüse existiert nicht; allerdings kommen die besonderen Vorteile erst ab einem Minimaldurchmesser der Gasdüse von etwa 0,8mm bis 1mm zum Tragen.

Nachstehend werden besondere Aspekte der vorliegenden Erfindung anhand von in der Zeichnung veranschaulichten bevorzugten Ausführungsbeispielen näher erläutert. Dabei zeigt
- Fig. 1: ein Blockschaltbild zu der Gasversorgungseinrichtung einer erfindungsgemäßen Maschine zur Laserbearbeitung von Werkstücken,
- Fig. 2: eine Detailansicht des bei der Gasversorgungseinrichtung nach Fig. 1 einsetzbaren proportionalen Druckregelventils,
- Fig. 3: ein schematischer Darstellung ein Detail des Druckregelventils nach Fig. 2,
- Fig. 4: ein schematischer Darstellung ein anderes Detail des Druckregelventils nach Fig. 2
- Fig. 5: ein schematischer Darstellung eine Abwandlung des in Fig. 4 gezeigten Details des Druckregelventils nach Fig. 2
- Fig. 6: in schematischer Darstellung eine Abwandlung des Druckregelventils nach Fig. 2,
- Fig. 7: in schematischer Darstellung eine weitere Abwandlung des Druckregelventils nach Fig. 2,
- Fig. 8: in schematischer Ansicht eine erste Möglichkeit der Anordnung des Druckregelventils nach Fig. 2 und
- Fig. 9: in schematischer Darstellung eine andere Möglichkeit der Anordnung des Druckregelventils nach Fig. 2.

Nachdem sich die die erfindungsgemäße Maschine zur Laserbearbeitung von Werkstücken vom Stand der Technik durch sich in der Gasversorgungseinheit manifestierende Besonderheiten unterscheidet, beschränken sich die nachstehenden Erläuterungen der Erfindung auf die Gasversorgungseinheit. Im Hinblick auf den weiteren Aufbau und die sonstigen Komponenten der Maschine zur Laserbearbeitung, namentlich den Werkstückhalter, die Laserbearbeitungseinheit, die Antriebseinheit zur Bewegung der Laserbearbeitungseinheit und des Werkstückhalters relativ zueinander sowie die Maschinensteuerung, wird auf den hinlänglich bekannten Stand der Technik verwiesen, insbesondere die weiter oben genannten Druckschriften zum Stand der Technik, deren Offenbarungsgehalt durch Bezugnahme zum Gegenstand der vorliegenden Anmeldung gemacht wird, sowie die am Markt erhältlichen Maschinen.

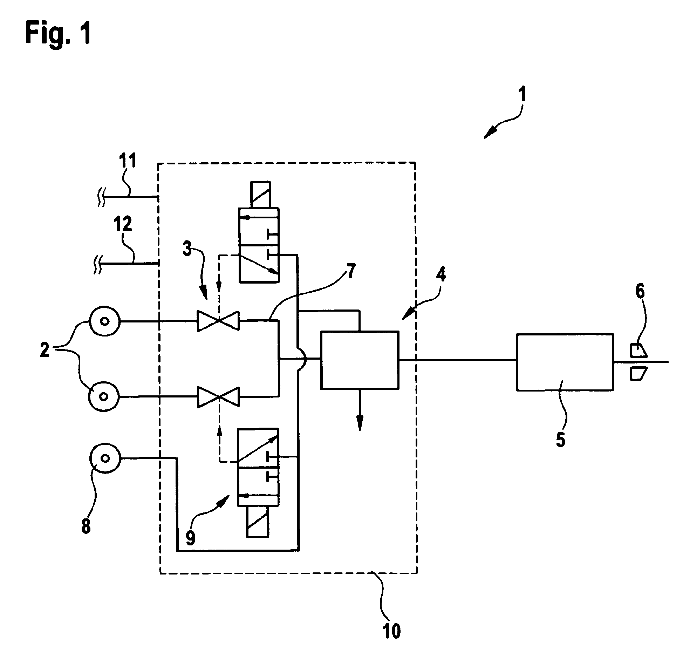

Die in Fig. 1 veranschaulichte Gasversorgungseinheit 1 einer Maschine zur Bearbeitung eines Werkstücks mittels eines Laserstrahls umfasst zwei Gasquellen 2, die unterschiedliche Gase (Prozessgase) unter hohem Druck bevorraten, zwei jeweils einer Gasquelle 2 zugeordnete Schaltventile 3, ein proportionales Druckregelventil 4, welches über die Schaltventile 3 mit jeder der beiden Gasquellen 2 verbindbar ist, und eine an der Laserbearbeitungseinheit 5 angeordnete Gasdüse 6. Die genannten Komponenten der Gaseinheit sind über eine Leitungsanordnung 7 miteinander verbunden. Die beiden Schaltventile 3 sind als rückströmungsfeste Pneumatikventile ausgeführt, d.h. sie sind pneumatisch schaltbar. Hierzu ist eine Steuergasquelle 8 vorgesehen, die über jeweils ein Ansteuerventil 9 auf die Schaltventile 3 schaltbar ist, wobei es sich bei den Ansteuerventilen 9 insbesondere um Magnetventile oder Piezoventile handeln kann. Auch das proportionale Druckregelventil 4 ist pneumatisch betätigbar, so dass auch dieses an die Steuergasquelle 8 angeschlossen ist. Das System 10 ist weiterhin über einen elektrischen Anschluss 11 an die Stromversorgung und über eine Schnittstelle 12 an die Maschinensteuerung der Maschine angeschlossen.

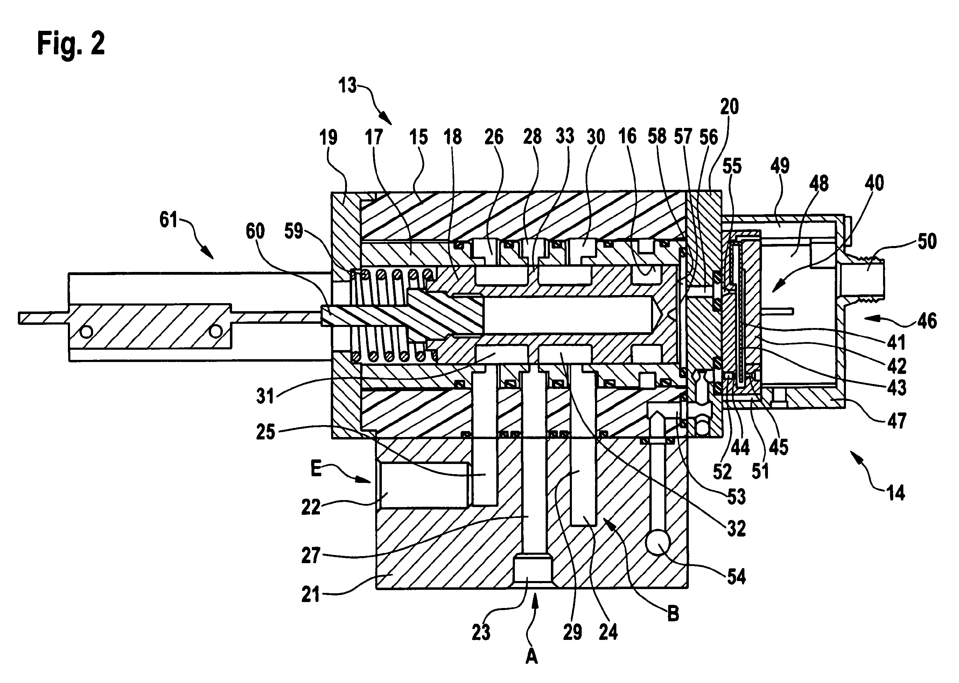

Das proportionale Druckregelventil 4 umfasst (vgl. Fig. 2) eine auf hohe Betriebsdrücke und hohe Gasdurchsätze ausgelegte pneumatische Leistungsstufe 13 und eine diese betätigende piezopneumatische Vorstufe 14. Die pneumatische Leistungsstufe 13 umfasst einen im wesentlichen zylindrischen Gehäuseabschnitt 15, eine in diesen eingesetzte, eine Steuerkolbenbohrung 16 definierende Steuerhülse 17 und einen in der Steuerkolbenbohrung axial verschiebbaren Steuerkolben 18. Endseitig ist der Gehäuseabschnitt 15 durch einen ersten Gehäusedeckel 19 und einen zweiten Gehäusedeckel 20 verschlossen. Weiterhin ist an den Gehäuseabschnitt 15 ein Anschlussblock 21 angeflanscht. An dem Anschlussblock 21 sind ein Eingangsanschluss 22, ein Ausgangsanschluss 23 und ein Belüftungsanschluss 24 vorgesehen. Mit dem Eingangsanschluss 22 kommuniziert über eine Eingangsbohrung 25 ein in der Steuerhülse 17 vorgesehener Eingangsdurchbruch 26. Mit dem Ausgangsanschluss 23 kommuniziert über eine Ausgangsbohrung 27 ein in der Steuerhülse 17 vorgesehener Ausgangsdurchbruch 28. Und mit dem Belüftungsanschluss 24 kommuniziert über eine Belüftungsbohrung 29 ein in der Steuerhülse 17 vorgesehener Belüftungsdurchbruch 30. Wie dies u.a. in Fig. 2 gezeigt ist, sind die Querschnittsflächen des Eingangsdurchbruchs 26 und des Belüftungsdurchbruchs 30 größer als die Querschnittsfläche des Ausgangsdurchbruchs 28.

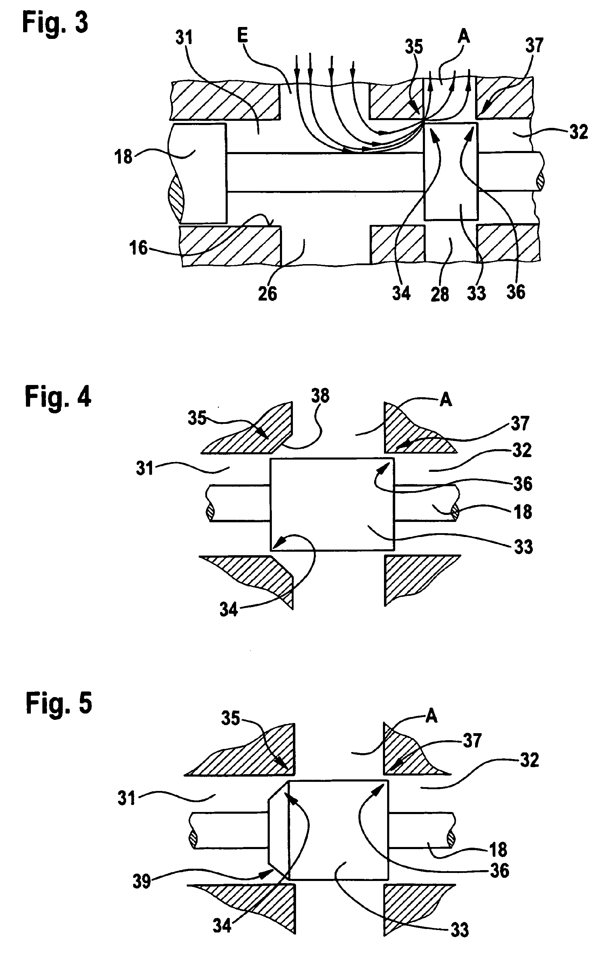

Am Umfang des Steuerkolbens sind zwei Überströmnuten angeordnet, nämlich eine erste Überströmnut 31 und eine zweite Überströmnut 32. Mittels der ersten Überströmnut 31 lassen bei einer entsprechenden, gegenüber der in Fig. 2 gezeigten Lage nach rechts verschobenen Stellung des Steuerkolbens 18 der Eingang E und der Ausgang A des Druckregelventils, d.h. der Eingangsdurchbruch 26 und der Ausgangsdurchbruch 28 miteinander verbinden. Und mittels der zweiten Überströmnut 32 lassen bei einer entsprechenden, gegenüber der in Fig. 2 gezeigten Lage nach links verschobenen Stellung des Steuerkolbens 18 der Ausgang A und die Belüftung B des Druckregelventils, d.h. der Ausgangsdurchbruch 28 und der Belüftungsdurchbruch 30 miteinander verbinden. Zwischen den beiden Überströmnuten 31 und 32 weist der Steuerkolben 18 einen ringförmigen, an der Steuerkolbenbohrung 16 im Wesentlichen dichtend anliegenden Steg 33 auf. Der ersten Überströmnut 31 zugewandt ist (vgl. Fig. 3) an dem Steg 33 eine erste Steuerkante 34 vorgesehen, die mit einer im Bereich des Ausgangsdurchbruchs 28 angeordneten gehäusefesten zweiten Steuerkante 35 zusammenwirkt. Und der zweiten Überströmnut 32 zugewandt ist an dem Steg 33 eine dritte Steuerkante 36 vorgesehen, die mit einer ebenfalls im Bereich des Ausgangsdurchbruchs 28 angeordneten gehäusefesten vierten Steuerkante 37 zusammenwirkt. Durch Veränderung der Stellung des Steuerkolbens 18 innerhalb der Steuerhülse 17 lassen sich zwischen der ersten Steuerkante 34 und der zweiten Steuerkante 35 bzw. zwischen der dritten Steuerkante 36 und der vierten Steuerkante 37 jeweils ein durch einen variablen Steuerspalt gebildeter Strömungsweg zwischen dem Eingang und dem Ausgang bzw. zwischen dem Ausgang und der Belüftung definieren.

Fig. 3 veranschaulicht die Strömungsverhältnisse, wenn durch eine entsprechende Stellung des Steuerkolbens 18 eine vergleichsweise geringfügige Öffnung des zwischen der ersten Steuerkante 34 und der zweiten Steuerkante 35 gebildeten Steuerspalts besteht. Der für eine entsprechend starke Druckminderung zwischen dem Eingang E und dem Ausgang A maßgebliche Drosseleffekt im Bereich des Steuerspalts und die durch diesen ausgelöste extreme Verwirbelung des zum Ausgang gelangenden Prozessgases bleibt aufgrund der gewählten Anordnung der ersten und der zweiten Steuerkante ohne Auswirkungen auf die Stellung des Steuerkolbens und die erzielbare Präzision der eingestellten Lage. Denn die verwirbelte Strömung liegt im Bereich des Gehäuseabschnitts 15 vor und greift nur (ohne Auswirkungen auf den Steuerkolben) an der Umfangsfläche des Steges 33 an. Im Bereich der stets mit dem Eingang E verbundenen ersten Überströmnut 31 liegt indessen das Prozessgas konstant mit dem Druck der jeweiligen Gasquelle 2 an.

Die Figuren 4 und 5 veranschaulichen Maßnahmen, durch die sich erreichen lässt, dass sich die Strömungsregelcharakteristik beim Belüften des Ausgangs A, d.h. bei einer Verbindung des Ausgangs A über die zweite Überströmnut 32 mit der Belüftung B, von der für das Öffnen des Proportionalventils durch Verbinden des Ausgangs A mit dem Eingang E über die erste Überströmnut 31 geltenden Strömungsregelcharakteristik unterscheidet. Entscheidend hierfür ist eine Profilierung der ersten Steuerkante 34 und/oder der zweiten Steuerkante 35 dergestalt, dass die dritte Steuerkante 36 und die vierte Steuerkante 37 scharfkantiger sind als die erste und/oder die zweite Steuerkante. Nach Fig. 4 ist hierzu die gehäusefeste zweite Steuerkante 35 angefast, d.h. mit einer Fase 38 versehen. Nach Fig. 5 ist demgegenüber zum selben Zweck die erste Steuerkante 34 angefast, d.h. mit einer Fase 39 versehen.

Die der Betätigung der pneumatischen Leitungsstufe 13 dienende piezopneumatische Vorstufe 14 umfasst ein piezopneumatisches Pilot-Proportionalventil 40. Dieses weist, wie dies als solches bekannt ist, ein einen Innenraum 41 umschließendes Gehäuse 42 auf, in dem ein piezokeramischer Biegewandler 43 angeordnet ist. Der Biegewandler 43 ist einseitig fest eingespannt. Sein freies Ende ist zwischen zwei Düsen angeordnet, nämlich zwischen einer Eingangsdüse 44 und einer Abluftdüse 45. Das Gehäuse 42 des piezopneumatischen Pilot-Proportionalventils 40 ist in einer Kapselung 46 in Form einer Schutzglocke 47 untergebracht, in deren Innenraum 48 die mit der Abluftdüse 45 verbundene Abluftöffnung des piezopneumatischen Pilot-Proportionalventils mündet. Die Schutzglocke 47, die auch einen Teil 49 der elektronischen Komponenten der Gassteuereinheit aufnimmt, weist eine Austrittsöffnung 50 mit einem gegenüber der Abluftdüse 45 großen Querschnitt auf. Das Gehäuse 42 des piezopneumatischen Pilot-Proportionalventils 40 ist lagegesichert in einer entsprechenden Aussparung 51 der Schutzglocke 47 aufgenommen. Durch Anbringen der Schutzglocke 47 an dem zweiten Gehäusedeckel 20 wird das Gehäuse 42 des piezopneumatischen Pilot-Proportionalventils 40 fest an diesen angelegt.

Die Eingangsdüse 44 des piezopneumatischen Pilot-Proportionalventils 40 ist über eine Öffnung 52 in dessen Gehäuse 42 an eine in dem Gehäuse der pneumatischen Leistungsstufe 13 angeordnete, sich durch den zweiten Gehäusedeckel 20 und den Gehäuseabschnitt 15 bis zum Anschlussblock 21 erstreckende Steuergasbohrung 53 angeschlossen. Am Anschlussblock 21 ist ein Steuergasanschluss 54 vorgesehen, an dem eine die Steuergasbohrung 53 mit der Steuergasquelle 8 verbindende Gasleitung anschließbar ist.

Die piezopneumatische Vorstufe 14 beaufschlagt unmittelbar die pneumatische Leistungsstufe 13, und zwar über einen Steuerdruckausgang 55. Hierzu kommuniziert der Innenraum 41 des Gehäuses 42 des piezopneumatischen Pilot-Proportionalventils 40 über den besagten Steuerdruckausgang 55 mit der pneumatischen Leistungsstufe 13. Im einzelnen ist der Steuerdruckausgang 55 über eine den zweiten Gehäusedeckel 20 durchsetzende Steuerdruckbohrung 56 an einen Steuerraum 57 angeschlossen, der durch den zweiten Gehäusedeckel 20, die diesem zugewandte Stirnfläche 58 des Steuerkolbens 18 und die Steuerhülse 17 begrenzt ist. An dem gegenüberliegenden Ende stützt sich der Steuerkolben 18 über eine Rückstellfeder 59 an dem ersten Gehäusedeckel 19 ab. Die Stellung des Steuerkolbens 18 innerhalb de Steuerhülse 17 hängt auf diese Weise allein von dem innerhalb des Steuerraumes 57 herrschenden Druck ab, der sich mittels des Pilot-Proportionalventils 40, nämlich durch entsprechende elektrische Beaufschlagung des Biegewandlers 43, äußerst präzise und schnell einstellen lässt.

Das Druckregelventil ist an eine als kombinierte Druck-/Lageregelung ausgeführte digitale Regelstufe angeschlossen. Hierzu werden sowohl der am Ausgang A herrschende Druck als auch die tatsächliche Stellung des Steuerkolbens 18 auf die Regelstufe geschaltet. Hierzu ist mit dem Steuerkolben 18 ein Messstößel 60 verbunden, der den ersten Gehäusedeckel 19 durchsetzt und mit einem als solches bekannten, an dem ersten Gehäusedeckel 19 angeordneten Stellungssensor 61 zusammenwirkt.

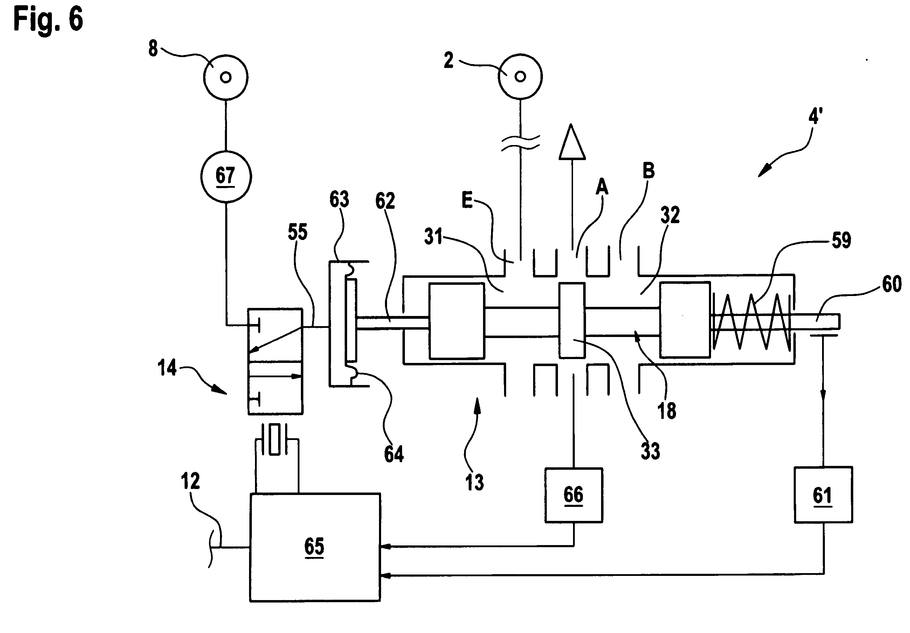

Fig. 6 zeigt schematisch eine solche Ausgestaltung des Druckregelventils 4', die gegenüber der Ausführungsform nach Fig. 2 insoweit abgewandelt ist, als auf den Steuerkolben 18 ein Betätigungsstößel 62 wirkt, der mit einem an den Steuerdruckausgang 55 der piezopneumatischen Vorstufe 14 angeschlossenen, als solches bekannten Druck/Weg-Wandler 63 in Verbindung steht.

Gastechnisch ist auf diese Weise die piezopneumatische Vorstufe 14 über die Membran 64 des Druck/Weg-Wandlers 63 von der pneumatischen Leistungsstufe 13 getrennt. Mit 65 ist in Fig. 6 die eine Regelelektronik umfassende Gassteuereinheit mit Maschinenschnittstelle 12 bezeichnet. Mit der Regelelektronik der Gassteuereinheit 65 ist zusätzlich zum Stellungssensor 61 auch ein den Druck am Ausgang A ermittelnder Drucksensor 66 verbunden. Ebenfalls ist der zwischen die Steuergasquelle 8 und die piezopneumatische Vorstufe 14 geschaltete Vordruckregler 67 gezeigt. Im Übrigen gelten die vorstehenden Erläuterungen zu den Fig. 1 bis 5, auf die zur Vermeidung von Wiederholungen verwiesen wird, in entsprechender Weise. Hinzuweisen ist allein der Vollständigkeit halber noch darauf, dass die Anordnung der Beaufschlagung des Steuerkolbens 18 durch die piezopneumatische Vorstufe 14 und die Rückstellfeder 59 gegenüber der Ausführungsform nach Fig. 2 vertauscht sind.

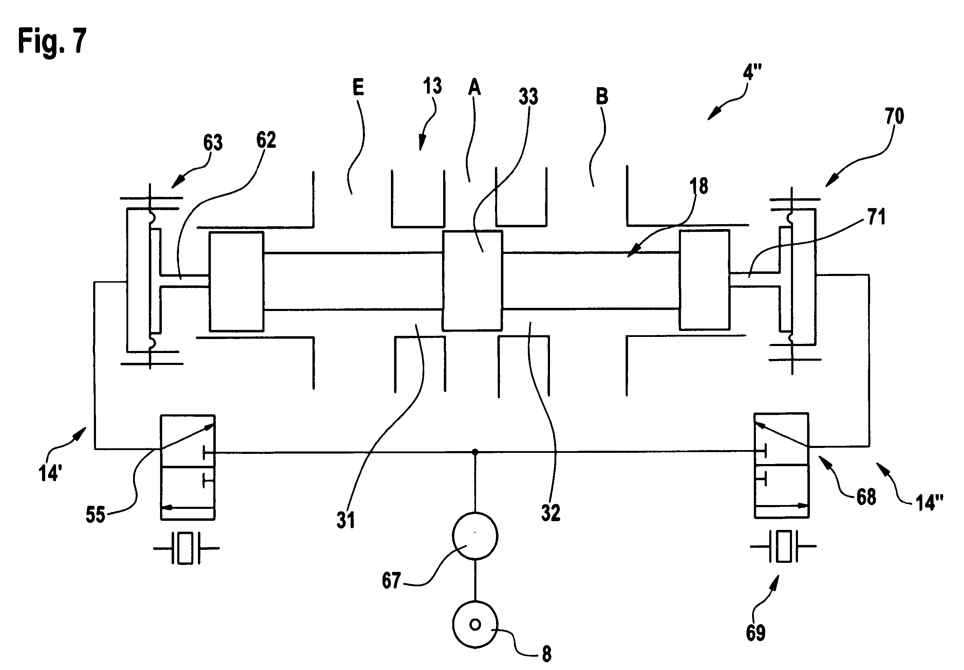

Bei der in Fig. 7 veranschaulichten weiteren Abwandlung des proportionalen Druckregelventils 4" wird die Stellung des Steuerkolbens 18, unter Verzicht auf eine Federrückstellung, durch zwei gegenläufig wirkende piezopneumatische Vorstufen 14' und 14" eingestellt. Der Steuerdruckausgang 55 der piezopneumatische Vorstufe 14' wirkt, wie dies vorstehend bereits erläutert wurde, über den Druck/Weg-Wandler 63 und den Betätigungsstößel 62 auf den Steuerkolben 18. Der Steuerdruckausgang 68 der piezopneumatische Vorstufe 14", die gewissermaßen ein piezopneumatisches Rückstell-Pilotventil 69 bildet, wirkt in entsprechender Weise über den Druck/Weg-Wandler 70 und den Rückstellstößel 71 auf den Steuerkolben 18.

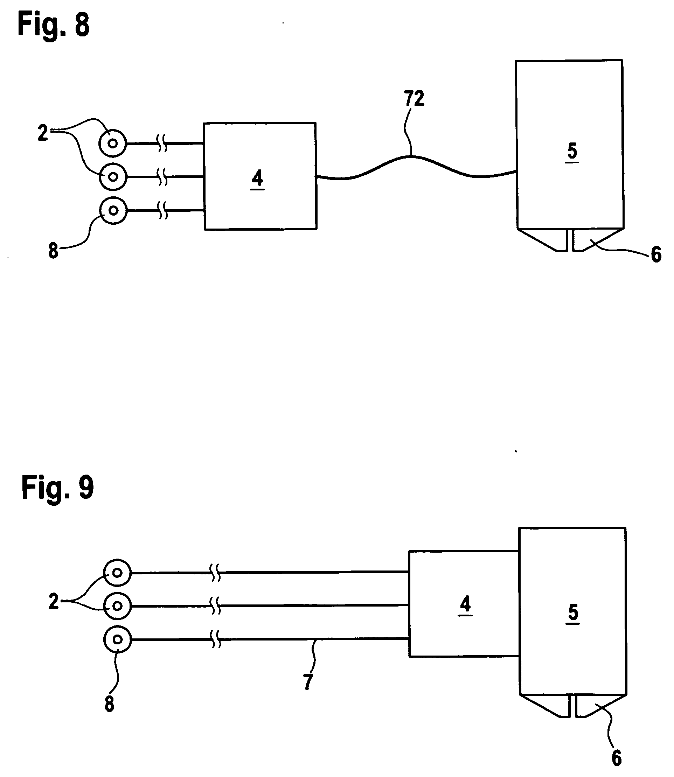

Die Figuren 8 und 9 veranschaulichen schematisch unterschiedliche Anordnungsvarianten der Komponenten der Gasversorgungseinrichtung innerhalb der Maschine zur Laserbearbeitung von Werkstücken. Nach Fig. 8 ist lediglich die Gasdüse 6 an der (bewegten) Laserbearbeitungseinheit 5 angeordnet, das proportionale Druckregelventil 4 indessen stationär. Das proportionale Druckregelventil 4 ist mit der Gasdüse 6 über eine flexible Anschlussleitung 72 verbunden. Nach Fig. 9 ist demgegenüber, wie dies durch das vergleichsweise geringe Gewicht des erfindungsgemäß eingesetzten proportionalen Druckregelventils 4 mit den weiter oben erläuterten vorteilhaften Auswirkungen möglich ist, das proportionale Druckregelventil 4 direkt an der Laserbearbeitungseinheit 5 angeordnet.

## Patentansprüche

1. Maschine zur Bearbeitung eines Werkstücks mittels eines Laserstrahls, insbesondere zum Laserschneiden von Metallen, umfassend einen Werkstückhalter, eine Laserbearbeitungseinheit (5), eine Antriebseinheit zur Bewegung der Laserbearbeitungseinheit und des Werkstückhalters relativ zueinander, eine Maschinensteuerung und eine Gasversorgungseinrichtung, wobei die Gasversorgungseinrichtung mindestens eine Gasquelle (2), eine der Laserbearbeitungseinheit zugeordnete Gasdüse (6), eine die Gasdüse mit der mindestens einen Gasquelle verbindende Leitungsanordnung (7) und mindestens ein in dieser angeordnetes, an eine Gassteuereinheit (65) angeschlossenes proportionales Druckregelventil (4, 4', 4") aufweist,
**dadurch gekennzeichnet,**
**dass** das proportionale Druckregelventil (4, 4', 4") eine piezopneumatische Vorstufe (14, 14') und eine von dieser betätigte pneumatische Leistungsstufe (13) umfasst.

2. Maschine nach Anspruch 1, **dadurch gekennzeichnet, dass** das proportionale Druckregelventil (4, 4', 4") an der Laserbearbeitungseinheit (5) angeordnet ist.

3. Maschine nach Anspruch 1 oder Anspruch 2, **dadurch gekennzeichnet, dass** die Gasdüse (6) an der Laserbearbeitungseinheit (5) angeordnet ist.

4. Maschine nach einem der Ansprüche 1 bis 3, **dadurch gekennzeichnet, dass** ein Steuerdruckausgang (55) der piezopneumatischen Vorstufe (14, 14') unmittelbar die pneumatische Leistungsstufe (13) beaufschlagt.

5. Maschine nach Anspruch 4, **dadurch gekennzeichnet, dass** die piezopneumatische Vorstufe (14) ein direkt an das Gehäuse (15, 19, 20) der pneumatischen Leistungsstufe (13) angebautes piezopneumatisches Pilot-Proportionalventil (40) umfasst.

6. Maschine nach Anspruch 5, **dadurch gekennzeichnet, dass** das piezopneumatische Pilot-Proportionalventil (40) ein Gehäuse (42) mit einem darin angeordneten, zwischen einer Eingangsdüse (44) und einer Abluftdüse (45) lageveränderbaren piezoelektrischen Biegewandler (43) umfasst.

7. Maschine nach Anspruch 6, **dadurch gekennzeichnet, dass** der Innenraum (41) des Gehäuses (42) des piezopneumatischen Pilot-Proportionalventils (40) mit der pneumatischen Leistungsstufe (13) kommuniziert.

8. Maschine nach einem der Ansprüche 6 oder 7,
**dadurch gekennzeichnet, dass** die Eingangsdüse (44) des piezopneumatischen Pilot-Proportionalventils (40) über eine Öffnung (52) in dessen Gehäuse (42) an eine in dem Gehäuse (15, 19, 20) der pneumatischen Leistungsstufe (13) angeordnete Steuergasbohrung (53) angeschlossen ist.

9. Maschine nach Anspruch 8, **dadurch gekennzeichnet, dass** die Steuergasbohrung (53) über einen Vordruckregler an eine Gasquelle (2) der Gasversorgungseinrichtung angeschlossen ist.

10. Maschine nach Anspruch 8, **dadurch gekennzeichnet, dass** die Steuergasbohrung (53) an eine von der Gasversorgungseinrichtung verschiedene Steuergasquelle (8) angeschlossen ist.

11. Maschine nach Anspruch 10, **dadurch gekennzeichnet, dass** die Steuergasbohrung über einen Vordruckregler (67) an die Steuergasquelle (8) angeschlossen ist.

12. Maschine nach einem der Ansprüche 1 bis 11,
**dadurch gekennzeichnet, dass** die pneumatische Leistungsstufe (13) einen Eingang (E), einen Ausgang (A) und einen in einer Steuerkolbenbohrung (16) axial verschiebbar geführten Steuerkolben (18) aufweist, der mindestens eine mit einer korrespondierenden gehäusefesten zweiten Steuerkante (35) zusammenwirkende erste Steuerkante (34) aufweist, wobei die erste und die zweite Steuerkante einen in dem Strömungsweg zwischen dem Eingang und dem Ausgang angeordneten variablen Steuerspalt definieren.

13. Maschine nach Anspruch 12, **dadurch gekennzeichnet, dass** die zweite Steuerkante (35) im Bereich der Öffnung des Ausgangs (A) zu der Steuerkolbenbohrung (16) angeordnet ist.

14. Maschine nach einem der Ansprüche 12 oder 13,
**dadurch gekennzeichnet, dass** die pneumatische Leistungsstufe (13) eine Belüftung (B) und der Steuerkolben (18) eine dritte Steuerkante (36) aufweist, die mit einer korrespondierenden gehäusefesten vierten Steuerkante (37) zusammenwirkt, wobei die dritte und die vierte Steuerkante einen in dem Strömungsweg zwischen dem Ausgang (A) und der Belüftung (B) angeordneten variablen zweiten Steuerspalt definieren.

15. Maschine nach Anspruch 14, **dadurch gekennzeichnet, dass** die vierte Steuerkante (37) im Bereich der Öffnung des Ausgangs (A) zu der Steuerkolbenbohrung (16) angeordnet ist.

16. Maschine nach einem der Ansprüche 14 oder 15,
**dadurch gekennzeichnet, dass** sich durch eine Profilierung der ersten und/oder der zweiten Steuerkante (34; 35) die Strömungsregelcharakteristik beim Belüften des Ausgangs (A) von der Strömungsregelcharakteristik beim Öffnen des Proportionalventils durch Verbinden des Ausgangs mit dem Eingang (E) unterscheidet.

## Claims

1. A machine for processing a workpiece by means of a laser beam, in particular for cutting metals using a laser, comprising a workpiece holder, a laser processing unit (5), a drive unit for moving the laser processing unit and the workpiece holder in relation to each other, a machine control and a gas supply device, wherein the gas supply device comprises at least one gas source (2), a gas nozzle (6) associated with the laser processing unit, a line arrangement (7) connecting the gas nozzle with the at least one gas source and at least one proportional pressure regulating valve (4, 4', 4") arranged in the line arrangement (7) and connected to a gas control unit (65),
**characterised in that**
the proportional pressure regulating valve (4, 4', 4") comprises a piezo-pneumatic preliminary stage (14, 14') and a pneumatic power stage (13) actuated by the same.

2. The machine according to claim 1, **characterised in that** the proportional pressure regulating valve (4, 4', 4") is arranged on the laser processing unit (5).

3. The machine according to claim 1 or 2, **characterised in that** the gas nozzle (6) is arranged on the laser processing unit (5).

4. The machine according to one of claims 1 to 3, **characterised in that** a control pressure output (55) of the piezo-pneumatic preliminary stage (14, 14') directly impacts the pneumatic power stage (13).

5. The machine according to claim 4, **characterised in that** the piezo-pneumatic preliminary stage (14) comprises a piezo-pneumatic pilot proportional valve (40) directly attached to the housing (15, 19, 20) of the pneumatic power stage (13).

6. The machine according to claim 5, **characterised in that** the piezo-pneumatic pilot proportional valve (40) comprises a housing (42) with a piezo-pneumatic bending transducer (43) arranged therein, which can change its position between an input nozzle (44) and an exhaust nozzle (45).

7. The machine according to claim 6, **characterised in that** the interior (41) of the housing (42) of the piezo-pneumatic pilot proportional valve (40) communicates with the pneumatic power stage (13).

8. The machine according to one of claims 6 or 7, **characterised in that** the input nozzle (44) of the piezo-pneumatic pilot proportional valve (40) is connected, via an opening (52) in its housing (42), to a control gas bore (53) arranged in the housing (15, 19, 20) of the pneumatic power stage (13).

9. The machine according to claim 8, **characterised in that** the control gas bore (53) is connected to a gas source (2) of the gas supply device via a pre-pressure control.

10. The machine according to claim 8, **characterised in that** the control gas bore (53) is connected to a control gas source (8) different from the gas supply device.

11. The machine according to claim 10, **characterised in that** the control gas bore is connected to the control gas source (8) via a pre-pressure control (67).

12. The machine according to one of claims 1 to 11, **characterised in that** the pneumatic power stage (13) comprises an input (E), an output (A) and a control piston (18) movably guided in axial direction in a control piston bore (16), which piston comprises at least one first control edge (34) cooperating with a corresponding second control edge (35) fixed to the housing, wherein the first and second control edges define a variable control gap arranged in the flow path between the input and the output.

13. The machine according to claim 12, **characterised in that** the second control edge (35) is arranged in the area of the opening of the output (A) to the control piston bore (16).

14. The machine according to one of claims 12 or 13 **characterised in that** the pneumatic power stage (13) comprises a vent (B), and the control piston (18) comprises a third control edge (36), which cooperates with a corresponding fourth control edge (37) fixed to the housing, wherein the third and fourth control edges define a variable second control gap arranged in the flow path between the output (A) and the vent (B).

15. The machine according to claim 14, **characterised in that** the fourth control edge (37) is arranged in the area of the opening of the output (A) to the control piston bore (16).

16. The machine according to one of claims 14 or 15, **characterised in that** due to a profiling of the first and/or second control edge (34; 35), the flow control characteristic during venting of the output (A) is different from the flow control characteristic during opening of the proportional valve by connecting the output to the input (E).

## Revendications

1. Machine pour l'usinage d'une pièce au moyen d'un rayon laser, en particulier pour le découpage au laser de métaux, comprenant un porte-outil, une unité d'usinage au laser (5), une unité d'entraînement pour le déplacement de l'unité d'usinage au laser et du porte-outil l'un par rapport à l'autre, une commande de machine et un système d'alimentation en gaz, le système d'alimentation en gaz comportant au moins une source de gaz (2), une buse à gaz (6) attribuée à l'unité d'alimentation en gaz, un agencement de conduits (7) reliant la buse à gaz à au moins une source de gaz et au moins une soupape de réglage de pression (4, 4', 4") proportionnelle, disposée dans celle-ci, raccordée à une unité de commande de gaz (65),
**caractérisée en ce que**
la soupape de réglage de pression (4, 4', 4") proportionnelle comprend un étage préliminaire piézo-pneumatique (14, 14') et un étage de puissance (13) pneumatique commandé par celui-ci.

2. Machine selon la revendication 1, **caractérisée en ce que** la soupape de réglage de pression (4, 4', 4") proportionnelle est disposée sur l'unité d'usinage au laser (5).

3. Machine selon la revendication 1 ou la revendication 2, **caractérisée en ce que** la buse à gaz (6) est disposée sur l'unité d'usinage au laser (5).

4. Machine selon l'une quelconque des revendications 1 à 3, **caractérisée en ce qu'**une sortie de pression de commande (55) de l'étage préliminaire piézo-pneumatique (14,14') alimente directement l'étage de puissance pneumatique (13).

5. Machine selon la revendication 4, **caractérisée en ce que** l'étage préliminaire piézo-pneumatique (14) comprend une soupape proportionnelle pilote piézo-pneumatique (40) montée directement sur le boîtier (15, 19, 20) de l'étage de puissance pneumatique (13).

6. Machine selon la revendication 5, **caractérisée en ce que** la soupape proportionnelle pilote piézo-pneumatique (40) comprend un boîtier (42) avec un transducteur piézoélectrique à flexion (43) à position variable disposé dedans entre une buse d'entrée (44) et une buse d'évacuation d'air (45).

7. Machine selon la revendication 6, **caractérisée en ce que** l'espace intérieur (41) du boîtier (42) de la soupape proportionnelle pilote piézo-pneumatique (40) communique avec l'étage de puissance pneumatique (13).

8. Machine selon l'une quelconque des revendications 6 ou 7, **caractérisée en ce que** la buse d'entrée (44) de la soupape proportionnelle pilote piézo-pneumatique (40) est raccordée par le biais d'une ouverture (52) dans le boîtier (42) de celle-ci sur un orifice de gaz de commande (53) disposé dans le boîtier (15, 19, 20) de l'étage de puissance pneumatique (13).

9. Machine selon la revendication 8, **caractérisée en ce que** l'orifice de gaz de commande (53) est raccordé par le biais d'un régulateur de pression d'admission à une source de gaz (2) du système d'alimentation en gaz.

10. Machine selon la revendication 8, **caractérisée en ce que** l'orifice de gaz de commande (53) est raccordé à une source de gaz de commande (8) différente du système d'alimentation en gaz.

11. Machine selon la revendication 10, **caractérisée en ce que** l'orifice de gaz de commande est raccordé par le biais d'un régulateur de pression d'admission (67) à la source de gaz de commande (8).

12. Machine selon l'une quelconque des revendications 1 à 11, **caractérisée en ce que** l'étage de puissance pneumatique (13) comporte une entrée (E), une sortie (A) et un piston de commande (18) guidé axialement de manière mobile dans un alésage de piston de commande (16), qui comporte au moins une première arête de commande (34) coopérant avec une deuxième arête de commande (35) correspondante fixe sur le boîtier, la première et la deuxième arête définissant un interstice de commande variable disposé dans la trajectoire d'écoulement entre l'entrée et la sortie.

13. Machine selon la revendication 12, **caractérisée en ce que** la deuxième arête de commande (35) est disposée dans la zone de l'ouverture de la sortie (A) vers l'alésage du piston de commande (16).

14. Machine selon 1"une quelconque des revendications 12 ou 13, **caractérisée en ce que** l'étage de puissance pneumatique (13) comporte une aération (B) et le piston de commande (18) une troisième arête de commande (36), qui coopère avec une quatrième arête de commande (37) correspondante fixe sur le boîtier, la troisième et la quatrième arête de commande définissant un deuxième interstice de commande variable disposé dans la trajectoire d'écoulement entre la sortie (A) et l'aération (B).

15. Machine selon la revendication 14, **caractérisée en ce que** la quatrième arête de commande (37) est disposée dans la zone de l'ouverture de la sortie (A) vers l'alésage du piston de commande (16).

16. Machine selon l'une quelconque des revendications 14 ou 15, **caractérisée en ce que** par un profilage de la première et/ou de la deuxième arête de commande (34, 35), la caractéristique de régulation d'écoulement à l'aération de la sortie (A) se distingue de la caractéristique d'écoulement à l'ouverture de la soupape proportionnelle par raccordement de la sortie à l'entrée (E).
